(19) **Europäisches Patentamt / European Patent Office / Office européen des brevets**

(11) **EP 4 765 664 A1**

(12) **EUROPEAN PATENT APPLICATION**
published in accordance with Art. 153(4) EPC

(43) Date of publication:
**24.06.2026 Bulletin 2026/26**

(21) Application number: **24855353.9**

(22) Date of filing: **11.05.2024**

(51) International Patent Classification (IPC):
**H04B 7/06** (2006.01)

(52) Cooperative Patent Classification (CPC):
**H04B 7/06; H04B 7/08; H04W 16/28**

(86) International application number:
**PCT/CN2024/092658**

(87) International publication number:
**WO 2025/039623 (27.02.2025 Gazette 2025/09)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **23.08.2023 CN 202311073788**

(71) Applicant: **ZTE Corporation**
**Shenzhen, Guangdong 518057 (CN)**

(72) Inventors:
• **YU, Hongkang**
**Shenzhen, Guangdong 518057 (CN)**

• **ZHANG, Shujuan**
**Shenzhen, Guangdong 518057 (CN)**
• **CHEN, Yijian**
**Shenzhen, Guangdong 518057 (CN)**
• **SUN, Yunqi**
**Shenzhen, Guangdong 518057 (CN)**
• **JIAN, Mengnan**
**Shenzhen, Guangdong 518057 (CN)**
• **SI, Yuan**
**Shenzhen, Guangdong 518057 (CN)**

(74) Representative: **Ziebig Hengelhaupt Intellectual Property Attorneys**
**Patentanwaltskanzlei PartGmbB**
**Leipziger Straße 49**
**10117 Berlin (DE)**

(54) **BEAM TRAINING METHODS, COMMUNICATION APPARATUS, AND COMPUTER-READABLE STORAGE MEDIUM**

(57) The embodiments of the present disclosure relate to the technical field of communications. Provided are beam training methods, an apparatus, and a computer-readable storage medium, which can effectively reduce the overhead of beam training in near-field scenarios. A method comprises: transmitting a measurement reference signal by means of a plurality of first beams; receiving a first measurement result sent by a second node, the first measurement result being used for indicating the number of beams meeting a preset condition amongst the plurality of first beams and an optimal beam amongst the plurality of first beams; sending the measurement reference signal by means of a plurality of second beams, the plurality of second beams being used for scanning a target area determined on the basis of said number of beams; and receiving a second measurement result sent by the second node, the second measurement result being used for indicating an optimal beam amongst the plurality of second beams. The present disclosure can be used in wireless communications.

| | |
|---|---|
| A first node transmits a measurement reference signal by means of a plurality of first beams | S201 |
| The first node receives a first measurement result sent by a second node | S202 |
| The first node transmits the measurement reference signal by means of a plurality of second beams | S203 |
| The first node receives a second measurement result sent by the second node | S204 |

FIG. 2

**Description**

The present disclosure claims priority to Chinese Patent Application No. 202311073788.4, filed on August 23, 2023, which is hereby incorporated by reference in its entirety.

TECHNICAL FIELD

The present disclosure relates to the technical field of communications, and in particular, to a beam training method, a communication apparatus, and a storage medium.

BACKGROUND

An ultra large-scale multi-input multi-output (MIMO) system may focus signals in a specific direction through beamforming technology, thus improving the received signal quality and spectral efficiency for a user equipment (UE). In order to determine the optimal beam orientation of a base station (BS), beam training is required between BS and UE to determine the optimal beam.

As the aperture for the base station antenna array increases, users are more likely to appear in a near-field range of the BS. In near-field scenarios, electromagnetic waves have spherical wave characteristics, which means that the beam may not only focus at different angles, but also at different distances. This will double the number of candidate beams and increase the cost of beam training.

SUMMARY

A beam training method, a communication apparatus, and a computer-readable storage medium are provided in the embodiments of the present disclosure, which may effectively reduce the cost of beam training in near-field scenarios.

In an aspect, a beam training method is provided, which is applied to a first node, and includes:

sending a measurement reference signal through a plurality of first beams;
receiving a first measurement result sent from a second node; where the first measurement result is used to indicate a number of beams meeting a preset condition among the plurality of first beams, and an optimal beam among the plurality of first beams;
sending a measurement reference signal through a plurality of second beams; where the plurality of second beams are used to scan a target area determined based on the number of beams; and
receiving a second measurement result sent from the second node; where the second measurement result is used to indicate an optimal beam among the plurality of second beams.

In another aspect, a beam training method is provided, which is applied to a f second node, and includes:

measuring a measurement reference signal sent from a first node through a plurality of first beams;
sending a first measurement result; where the first measurement result is used to indicate a number of beams meeting a preset condition among the plurality of first beams, and an optimal beam among the plurality of first beams;
measuring a measurement reference signal sent from the first node through a plurality of second beams; where the plurality of second beams are used to scan a target area determined based on the number of beams; and
sending a second measurement result; where the second measurement result is used to indicate an optimal beam among the plurality of second beams.

In yet another aspect, a beam training method is provided, which is applied to a first node, and includes:

sending a measurement reference signal through a plurality of beams on a transmission bandwidth; where the transmission bandwidth is divided into at least one subband, and a quasi co-location (QCL) relationship is not met for the measurement reference signal in different subbands; any beam among the plurality of beams splits into at least one sub-beam towards a different direction in a different subband; and
receiving a measurement result sent from a second node; where the measurement result is used to indicate a number of sub-beams meeting a preset condition, and an optimal sub-beam among the plurality of beams.

In yet another aspect, a beam training method is provided, which is applied to a f second node, and includes:

measuring a measurement reference signal sent from a first node through a plurality of sub-beams of a plurality of beams; where the transmission bandwidth of the first node is divided into at least one subband, and a QCL relationship is not met for the measurement reference signal in different subbands; any beam among the plurality of beams splits into at least one sub-beam towards a different direction in a different subband; and

sending a measurement result; where the measurement result is used to indicate a number of sub-beams meeting a preset condition, and an optimal sub-beam among the plurality of beams.

In yet another aspect, a communication apparatus is provided, which includes a sending module and a receiving module:

the sending module is configured to send a measurement reference signal through a plurality of first beams;
the receiving module is configured to receive a first measurement result sent from a second node; where the first measurement result is used to indicate a number of beams meeting a preset condition among the plurality of first beams, and an optimal beam among the plurality of first beams;
the sending module is further configured to send a measurement reference signal through a plurality of second beams; where the plurality of second beams are used to scan a target area determined based on the number of beams; and
the receiving module is further configured to receive a second measurement result sent from the second node; where the second measurement result is used to indicate an optimal beam among the plurality of second beams.

In yet another aspect, a communication apparatus is provided, which includes a measurement module and a sending module:

the measurement module is configured to measure a measurement reference signal sent from a first node through a plurality of first beams;
the sending module is configured to send a first measurement result; where the first measurement result is used to indicate a number of beams meeting a preset condition among the plurality of first beams, and an optimal beam among the plurality of first beams;
the measurement module is configured to measure a measurement reference signal sent from the first node through a plurality of second beams; where the plurality of second beams are used to scan a target area determined based on the number of beams; and
the sending module is further configured to send a second measurement result; where the second measurement result is used to indicate an optimal beam among the plurality of second beams.

In yet another aspect, a communication apparatus is provided, which includes a sending module and a receiving module:

the sending module is configured to send a measurement reference signal through a plurality of beams on a transmission bandwidth; where the transmission bandwidth is divided into at least one subband, and a QCL relationship is not met for the measurement reference signal in different subbands; any beam among the plurality of beams splits into at least one sub-beam towards a different direction in a different subband; and
the receiving module is configured to receive a measurement result sent from a second node; where the measurement result is used to indicate a number of sub-beams meeting a preset condition, and an optimal sub-beam among the plurality of beams.

In yet another aspect, a communication apparatus is provided, which includes a measurement module and a sending module:

the measurement module is configured to measure a measurement reference signal sent from a first node through a plurality of sub-beams of a plurality of beams; where the transmission bandwidth of the first node is divided into at least one subband, and a QCL relationship is not met for the measurement reference signal in different subbands; any beam among the plurality of beams splits into at least one sub-beam towards a different direction in a different subband; and
the sending module is configured to send a measurement result; where the measurement result is used to indicate a number of sub-beams meeting a preset condition, and an optimal sub-beam among the plurality of beams.

In yet another aspect, a communication apparatus is provided, which includes: a memory and a processor, where the memory and the processor are coupled; the memory is configured to store computer programs; and the processor, upon executing the computer programs, implements the beam training method according to any of the above-mentioned aspects.

In yet another aspect, a computer-readable storage medium is provided, where a computer program instruction is stored on the computer-readable storage medium, when the computer program instruction is performed by the processor, the beam training method according to any of the above-mentioned aspects is implemented.

In yet another aspect, there is provided a computer program product, where the computer program product includes computer program instructions, when the computer program instructions are executed, the beam training method according to any of the above-mentioned aspects is implemented.

A beam training method is provided in the embodiments of the present disclosure, in which a first node sends the measurement reference signal to the second node through the plurality of first beams. Correspondingly, the first node may receive the first measurement result sent from the second node, and the first measurement result may indicate the number of beams meeting the preset condition. The first node may determine the target area based on the number of beams, and send the measurement reference signal through the plurality of second beams to scan the target area, and then receive the measurement result from the second node. The number of beams fed back from the second node in the method provided in the present disclosure may reflect an approximate position of the second node. The first node determines the target area to be scanned in a second stage in beam scanning through a first stage of beam scanning, and may then perform the targeted second stage of scanning on the target area. In this way, a number of candidate beams may be reduced, and the cost of beam training in near-field scenarios may be effectively decreased.

BRIEF DESCRIPTION OF THE DRAWINGS

In order to describe the technical solutions in the present disclosure more clearly, accompanying drawings needed to be used in some embodiments of the present disclosure will be introduced briefly below. Obviously, the accompanying drawings described below are merely accompanying drawings of some embodiments of the present disclosure, and an ordinary person of those skilled in the art may obtain other accompanying drawings according to these accompanying drawings.

FIG. 1 is a structural schematic diagram of a communication system provided in some embodiments of the present disclosure.
FIG. 2 is a flowchart of a beam training method provided in some embodiments of the present disclosure.
FIG. 3 is a flowchart of another beam training method provided in some embodiments of the present disclosure.
FIG. 4 is a schematic diagram of beam scanning provided in some embodiments of the present disclosure.
FIG. 5 is a schematic diagram of beam gain curves corresponding to different distances provided in some embodiments of the present disclosure.
FIG. 6 is a schematic diagram of beam curves corresponding to different frequency bands provided in some embodiments of the present disclosure.
FIG. 7 is a schematic diagram of a QCL relationship provided in some embodiments of the present disclosure.
FIG. 8 is a schematic diagram for comparison of two implementations provided in some embodiments of the present disclosure.
FIG. 9 is a flowchart of yet another beam training method provided in some embodiments of the present disclosure.
FIG. 10 is a flowchart of yet another beam training method provided in some embodiments of the present disclosure.
FIG. 11 is a structural schematic diagram of a communication apparatus provided in some embodiments of the present disclosure.
FIG. 12 is a structural schematic diagram of another communication apparatus provided in some embodiments of the present disclosure.
FIG. 13 is a structural schematic diagram of yet another communication apparatus provided in some embodiments of the present disclosure.
FIG. 14 is a structural schematic diagram of yet another communication apparatus provided in some embodiments of the present disclosure.
FIG. 15 is a schematic diagram of composition of a communication apparatus provided in some embodiments of the present disclosure.

DETAILED DESCRIPTION

The technical solutions in the present disclosure will be described below clearly and completely in conjunction with the accompanying drawings in the present disclosure. Obviously, the described embodiments are merely a part of the embodiments of the present disclosure, but not all of the embodiments of the present disclosure. All other embodiments obtained based on the embodiments of the present disclosure by an ordinary person of those skilled in the art without paying any creative effort shall belong to the protection scope of the present disclosure.

It should be noted that in the present disclosure, wordings, such as "exemplary/exemplarily" or "for example" and variations thereof are used to indicate examples, instances, or illustrations. Any embodiment or design solution described as "exemplary/exemplarily" or "for example" in the present disclosure should not be illustrated as being more preferred or advantageous over other embodiments or design solutions. Specifically, the usage of wordings such as "exemplarily" or "for example" is intended to present relevant concepts in a concrete way.

Hereinafter, terms such as "first" and "second" are used for descriptive purposes only, but are not to be understood as indicating or implying the relative importance or implicitly indicating the number of indicated technical features. Thus, features limited with the expressions such as "first" or "second" may explicitly or implicitly include one or more of the features.

In the description of the present disclosure, unless otherwise specified, a character "/" means an "or" relationship, for example, "A/B" may represent A or B. "And/or" in the present disclosure is just an association relationship that describes relevant objects, indicating that three relationships can exist. For example, A and/or B may mean these three situations: A exists alone; A and B exist simultaneously; or B exist alone. In addition, "at least one" means a number of one or more, and "plurality" means a number of two or more.

A large-scale of MIMO is a key technology in the 5th generation mobile communication technology (5G) mobile communication system, its key characteristic is that a base station is configured with a large number of antennas. The base station may use the beamforming technology to concentrate signal power in a specific area, thus improving the signal quality and a communication speed. In the process of beamforming, in order to determine the optimal beam (i.e., a beam pointing a position closest to a position of a terminal), beam training is required between the base station and the user equipment (UE). During the process of beam training, the base station needs to send a plurality of beams towards different directions, and each beam carries a predefined reference signal. UE measures a reference signal and feed each beam indication information back, allowing the base station to determine the optimal beam based on the beam indication information.

In order to further improve the performance of communication systems, an ultra large-scale MIMO is considered a key technology for a future mobile communication system. Hundreds or thousands of antennas are deployed in the ultra large-scale MIMO system, which may bring higher beamforming gain. However, as an aperture for an antenna array increases, beam training faces higher costs for the following reasons.

On the one hand, according to the classical antenna theory, a width of a main lobe of a beam is inversely proportional to an aperture of an antenna array. A larger antenna array may narrow the main lobe of the beam, which means that more scans are required to cover a scanning area during beam training, resulting in more candidate beam directions and increased training costs. On the other hand, as the aperture of the antenna array increases, the near-field coverage range of the base station also increases, making it more likely for the UE to be located in the near-field. In some schemes, only the scenario where the UE is located in a far field of the base station is considered, where the electromagnetic waves may be regarded as plane waves and the beam may only be focused at different angles. In the scenario where the UE is located in the near-field of the base station, electromagnetic waves have spherical wave characteristics, and not only the focusing angle for the beam needs to be considered, but also the focusing distance needs to be considered. If exhaustive beam scanning is used for all possible angles and distances, there may be a large number of candidate beams, which may also lead to a significant increase in beam training costs.

In response to the issue of excessive cost in beam training, some solutions adopt a phased approach for beam training. Firstly, the base station sends a small number of wide beams for beam scanning, and narrows down a possible range of the optimal beam orientation based on a feedback from the UE, and sends a narrower beam for beam scanning in a next stage. However, current solutions are based on far-field scenarios, which only consider beam scanning in the angular dimension, and are not suitable for near-field scenarios. Research has found that when the UE is located in the near-field and the base station uses beamforming weights focused on the far-field for beam scanning, the UE may measure multiple beams with similar power sizes on multiple beams during measurement. And the more beams there are, the closer the terminal is to the base station.

Based on this, a beam training method is provided in the embodiments of the present disclosure, in which a first node sends the measurement reference signal to the second node through the plurality of first beams. Correspondingly, the first node may receive the first measurement result sent from the second node, and the first measurement result may indicate the number of beams meeting the preset condition. The first node may determine the target area based on the number of beams, and send the measurement reference signal through the plurality of second beams to scan the target area, and then receive the measurement result from the second node. The number of beams fed back from the second node in the method provided in the present disclosure may reflect an approximate position of the second node. The first node determines the target area to be scanned in a second stage in beam scanning through a first stage of beam scanning, and may then perform the targeted second stage of scanning on the target area. In this way, a number of candidate beams may be reduced, and the cost of beam training in near-field scenarios may be effectively decreased.

A network architecture of the mobile communication system (including but not limited to 5G and future 6G mobile communication systems) in the embodiments of the present disclosure may include a first node and a second node. In some examples, the first node may be a base station, and the second node may be a terminal/UE. In other examples, the first node may be a UE, and the second node may be a base station, which are not limited in the embodiments of the present disclosure.

The first node being the base station and the second node being the terminal are taken as an example for explanation below.

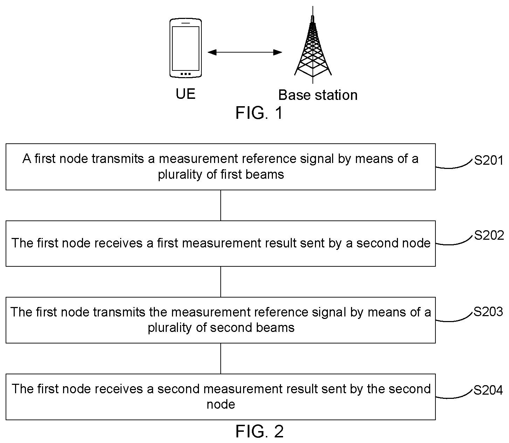

FIG. 1 is a structural schematic diagram of a communication system provided in the embodiments of the present disclosure. As shown in FIG. 1, the communication system includes a base station and a UE, where the base station and the UE may be connected through a wireless network. Herein, a wireless network may be supported by routers, switches, or other devices that facilitate communication between the base station and the UE, which are not limited in the embodiments of the present disclosure.

In some embodiments, the base station is configured to provide wireless access services for the UE. Specifically, a base station provides a service coverage area (also referred to as a cell). A UE entering the area may communicate with the base station via wireless signals to receive wireless access services provided by the base station.

In some embodiments, the base station may be a millimeter wave base station, an evolution nodeB (eNB), a next generation nodeB (gNB), a transmission receive point (TRP), a transmission point (TP), or a certain node in another type. Based on a size of a provided service coverage area, the base station may further be classified into a macro base station for providing a macro cell, a pico base station for providing a pico cell, or a femto base station for providing a femto cell. With the continuous evolution of wireless communication technologies, a future base station may also adopts other names. A signal coverage range of the base station also includes a near-field and a far-field, and the UE may be located in the near-field range or far-field range.

In some embodiments, UE may be a device with wireless transceiving functions (such as a mobile phone, a tablet, a wearable device, a vehicle-mounte device, a augmented reality (AR)/virtual reality (VR) device, a laptop, an ultra mobile personal computer (UMPC), a net-book, a personal digital assistant (PDA), etc.)A specific type of the UE is not limited in the embodiments of the present disclosure.

It should be understood that FIG. 1 is an exemplary structural diagram, and the number of devices included in the communication system shown in FIG. 1 is not limited, such as the number of base stations and the number of UEs are not limited. Furthermore, in addition to the devices shown in FIG. 1, the communication system shown in FIG. 1 may further include other devices, which is not limited thereto.

FIG. 2 is a flowchart of a beam training method provided in some embodiments of the present disclosure. Exemplarily, the beam training method provided in the present disclosure may be applied to the communication system shown in FIG. 1, specifically to the base station in FIG. 1.

As shown in FIG. 2, the beam training method provided in the present disclosure may specifically include the following steps.

In S201, a first node sends a measurement reference signal through a plurality of first beams.

In some embodiments, in near-field scenarios, the first node may perform beam scanning in the angular dimension and obtain a position of a UE in the angular dimension by sending the measurement reference signal through the plurality of first beams. That is to say, the first node adopts beamforming weights that focus on the far field in relevant technologies to achieve multiple first beams from different angles.

It should be noted that the above-mentioned beam scanning in the angular dimension to determine the position of the UE in the angular dimension may be carried out in two stages of scanning according to the schemes of relevant technologies. That is, the first node sends a small amount of wide beams for beam scanning, determines a possible range of the UE in the angular dimension based on the measurement result fed back from the UE, and sends a narrower beam for beam scanning in a next stage to determine an optimal beam orientation, that is, the position of the UE in the angular dimension. It can also be one stage of scanning, directly using a narrow beam to scan all possible angles to determine the optimal beam orientation, which is not limited in the embodiments of the present disclosure.

In S202, the first node receives a first measurement result sent from a second node.

Herein, the first measurement result is used to indicate a number of beams meeting a preset condition among the plurality of first beams, and an optimal beam among the plurality of first beams.

In some embodiments, the first node may receive the first measurement result for the plurality of first beams measured by the second node. The first measurement result may be used to indicate the optimal beam among the plurality of first beams (e.g., the first measurement result includes a beam identifier corresponding to the optimal beam), and may further indicate the number of beams meeting the preset condition. Herein, an orientation of the optimal beam in the first beams reflects position information of the second node in the angular dimension. The beam meeting the preset condition means that the beam may be used as a subsequent working beam, and the first node and the second node may communicate through this working beam.

In some embodiments, the preset condition is: a signal received power corresponding to a beam being greater than a first threshold; or a difference between the signal received power corresponding to the beam and a maximum signal received power being less than a second threshold. The maximum signal received power is a maximum signal received power corresponding to the optimal beam.

In S203, a first node sends a measurement reference signal through a plurality of second beams.

Herein, the plurality of second beams are used to scan a target area determined based on the number of beams.

In some embodiments, as mentioned above, the number of beams meeting the preset condition in the first measurement result may reflect the approximate position of the UE in the distance dimension (i.e., the target area). After the first node obtains the number of beams fed back from the second node, the first node may determine the target area to be scanned based on a value of the number of beams according to the number of beams. Then, the plurality of second beams are used to send the measurement reference signal to scan the target area.

In some embodiments, the larger the number of beams, the closer the second node is to the first node.

It should be noted that the number of beams meeting the preset condition may reflect a specific reason for the approximate position of the UE in the distance dimension, and detailed description may refer to the relevant contents in the following, which will not be repeated herein.

In S204, the first node receives a second measurement result sent from the second node.

Herein, the second measurement result is used to indicate an optimal sub-beam among the plurality of second beams.

In some embodiments, the first node may receive the second measurement result for the plurality of second beams measured by the second node. The second measurement result indicates the optimal beam among the plurality of second beams, in other words, the optimal beam reflects the position information of the second node in the distance dimension.

At this point, by determining the angular position of the second node in S202 and the distance position of the second node in S204, it is possible to accurately determine the position of the second node in the angular dimension and distance position, and the optimal beam orientation pointing to the second node in the near-field scenarios, thus to complete the beam training.

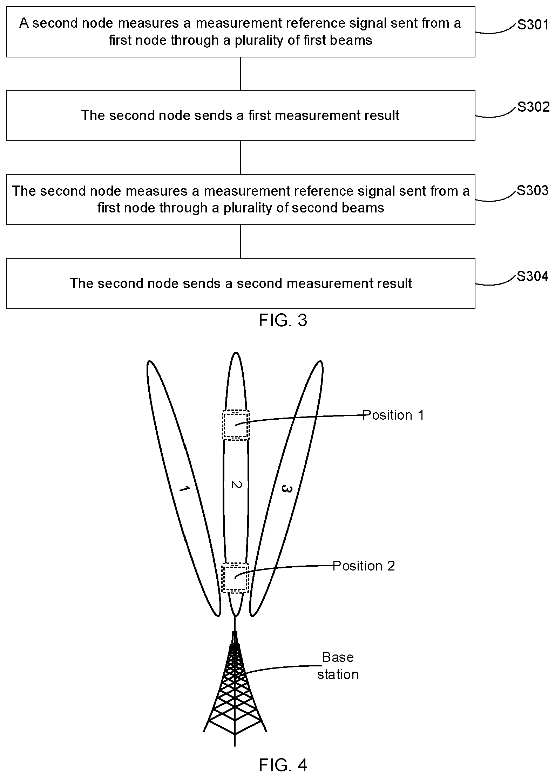

FIG. 3 is a flowchart of another beam training method provided in some embodiments of the present disclosure. Exemplarily, the beam training method provided in the present disclosure may be applied to the communication system shown in FIG. 1, specifically to the UE in FIG. 1.

As shown in FIG. 3, the beam training method provided in the present disclosure may specifically include the following steps.

In S301, a second node measures a measurement reference signal sent from a first node through a plurality of first beams.

In S302, the second node sends a first measurement result.

Herein, the first measurement result is used to indicate a number of beams meeting a preset condition among the plurality of first beams, and an optimal beam among the plurality of first beams.

Regarding the above-mentioned S301 and S302 mentioned above, the second node may perform measurement for the plurality of first beams of the first node to obtain the received signal power of one or more beams among the plurality of first beams. Furthermore, the number of beams meeting the preset condition and the optimal beam among the plurality of first beams are determined according to the received signal power of each beam, and then the first measurement result is generated and sent to the first node.

In S303, the second node measures a measurement reference signal sent from a first node through a plurality of second beams.

In S304, the second node sends a second measurement result.

Herein, the second measurement result is used to indicate an optimal sub-beam among the plurality of second beams.

Regarding the above-mentioned S303 and S304 mentioned above, the second node may perform measurement for the plurality of second beams sent from the first node to obtain the received signal power of one or more beams among the plurality of second beams. Furthermore, the optimal beam among the plurality of second beams is determined according to the received signal power of each beam, and the second measurement result is generated and sent to the first node.

A beam training method is provided in the embodiments of the present disclosure, in which a first node sends the measurement reference signal to the second node through the plurality of first beams. Correspondingly, the first node may receive the first measurement result sent from the second node, and the first measurement result may indicate the number of beams meeting the preset condition. The first node may determine the target area based on the number of beams, and send the measurement reference signal through the plurality of second beams to scan the target area, and then receive the measurement result from the second node. The number of beams fed back from the second node in the method provided in the present disclosure may reflect an approximate position of the second node. The first node determines the target area to be scanned in a second stage in beam scanning through a first stage of beam scanning, and may then perform the targeted second stage of scanning on the target area. In this way, a number of candidate beams may be reduced, and the cost of beam training in near-field scenarios may be effectively decreased.

Two stages of scanning performed on the first node in S201-S204 are illustrated in detail below in combination with specific embodiments.

The following formula is a possible phase shifter weights for implementing the beamforming:

$$w = \left[1, e^{j\pi(\alpha+\beta)}, e^{j\pi(2\alpha+4\beta)}, \dots, e^{j\pi((N-1)\alpha+(N-1)^2\beta)}\right]$$

where w is a phase shifter weight, and N is an antenna index.

The first node may configure a plurality of channel state information reference signal (CSI-RS) resources for beam training, with one CSI-RS resource corresponding to one directional beam. In the first stage of beam scanning, the first node sets a parameter $\beta$ in w to a constant value, and different CSI-RS resources correspond to different parameters $\alpha$, achieving beam scanning in the angular dimension. In addition, $\beta=0$ may be set to focus the beamforming on the far field, achieving traditional DFT beam scanning in the far field. Furthermore, after the second node performs the measurement, the feedback measurement result not only includes the CSI-RS resource indication information, but also the number of beams meeting the preset condition.

Correspondingly, after the first node receives the feedback, the first node may determine the approximate distance of the second node based on the number of beams, and then configure CSI-RS resources for the second stage of beam scanning based on this distance.

In the second stage of beam scanning, the first node sets the parameter a in w to a constant value (the specific value is determined based on the measurement result of the first stage), and different CSI-RS resources correspond to different parameters $\beta$, thus achieving beam scanning in the distance dimension. Furthermore, the second node feeds the measurement result back after the measurement is performed. Correspondingly, in the first stage, after receiving feedback, the optimal orientation in the distance dimension is determined.

In summary, after two stages of beam training, the first stage may determine the orientation of the optimal beam ultimately used for data transmission.

It can be understood that in near-field scenario beam training, if a number of candidate beams in the angle dimension is $N_1$ and a number of candidate beams in the distance dimension is $N_2$, then the traditional exhaustive scheme requires sending $N_1*N_2$ training beams. The method provided in the present disclosure only requires $(N_1+N_3)$ training beams, where $N_3$ represents a number of values of the parameters $\beta$ mentioned above, and $N_3$ is smaller than $N_2$. Since the base station has already made a preliminary estimate for the distance between the UE and the base station itself, there is no need to scan all $N_2$ distance dimensions, effectively reducing the cost of beam training.

Reasons for the number of beams meeting the preset condition mentioned above reflecting the approximate position of the UE are as follows.

In a case where the UE is within the near-field range of the base station, if the base station uses DFT beams focused on the far-field for beam scanning, the UE may measure similar power on a plurality of beams. For example, FIG. 4 is a schematic diagram of beam scanning provided in the embodiments of the present disclosure. It can be seen from FIG. 4, the base station emits beams in three different directions, namely Beam 1, Beam 2, and Beam 3. If the UE is located at an angle of the direction of Beam 2, when the UE is located at position 2, which is close to the base station, the beam is relatively dense. The signal received power measured by the UE for the three beams is not much different, and all three beams meet the preset condition. In a case where the UE is located at position 1, which is far away from the base station, the beam is relatively sparse, and the orientations of beams 1 and 3 deviate far from the UE. Therefore, when the UE performs measurements, it will find that only beam 2 meets the preset condition, and the signal received powers for beam 1 and beam 3 are much lower than that of beam 2.

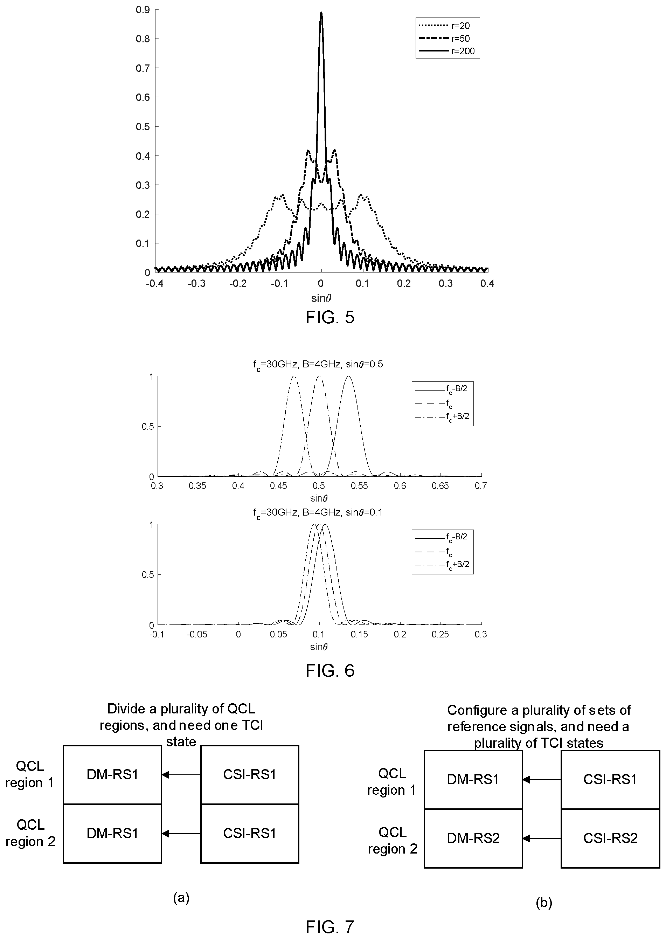

FIG. 5 is a schematic diagram of beam gain curves corresponding to different distances provided in the embodiments of the present disclosure. In FIG. 5, the horizontal axis represents a sine value $\sin\theta$ of the angle $\theta$ of the UE with respect to the base station, and the vertical axis represents a normalized beam gain, and the closer the normalized beam gain is to 1, the greater the beam gain, which indicates that the UE may measure a larger signal received power. Taking the UE at a position where $\sin\theta=0$ as an example, it can be seen from FIG. 5, there are three curves for different distances, namely r=20, r=50, and r=200. For the curve with r=20, it can be seen that for a beam transmitted by the base station at an angle corresponding to $\sin\theta=0$, the beam has a beam gain between 0.2 and 0.3 relative to the UE. If the base station sends beams at angles corresponding to $\sin\theta=-0.1$ and 0.1, respectively, it is equivalent to shifting the curve with r=20 by 0.1 units to the left/right, and the beam gain (i.e., corresponding to an angle of $\sin\theta=0$) relative to the UE is between 0.2-0.3. Therefore, it can be understood that if the UE is close to the base station, there are a plurality of beams with similar signal received powers meeting a preset condition.

Similarly, for the curve with r=200, it can be seen that if the base station sends a beam at an angle corresponding to $\sin\theta=0$, the beam has a beam gain of 0.9 relative to the UE. If the base station sends beams at angles corresponding to $\sin\theta=-0.1$ and 0.1, respectively, it is equivalent to shifting the curve with r=200 by 0.1 units to the left/right, and the beam gain (i.e., corresponding to an angle of $\sin\theta=0$) relative to the UE is between 0-0.1, which is significantly different from 0.9. Therefore, it can be understood that if the UE is far away from the base station, the number of beams meeting the preset condition is relatively small.

From the above analysis, it can be seen that the number of beams meeting the preset condition may reflect the distance between the UE and the base station, and the more beams there are, the closer the UE is to the base station.

In combination with specific embodiments and accompanying drawings below, a detailed explanation will be given on the process of two stage of scanning in S201-S204 and S301-S304 with taking the "dispersion effect" of the beam into account.

As the transmission bandwidth of large-scale antenna arrays increases, the beam may exhibit the so-called "dispersion effect", where a steering vector of the antenna array varies with the subcarrier frequency. Taking a uniform linear array (ULA) as an example, a spacing d between antenna elements is usually set to a half of a wavelength $\lambda_c$ of a center frequency, that is, d=0.5$\lambda_c$. Therefore, the steering vector of the antenna array may be expressed as:

$$a(\theta) = \left[1, e^{-j\frac{2\pi}{\lambda_m}dsin\theta}, e^{-j\frac{2\pi}{\lambda_m}2dsin\theta}, ..., e^{-j\frac{2\pi}{\lambda_m}(N-1)dsin\theta}\right]^T$$

$$= \left[1, e^{-j\pi\frac{fm}{fc}sin\theta}, e^{-j2\pi\frac{fm}{fc}sin\theta}, ..., e^{-(N-1)\pi\frac{fm}{fc}sin\theta}\right]^T$$

It can be seen that the steering vector $a(\theta)$ is related to a subcarrier frequency $f_m$. Some base stations typically utilize a radio frequency phase shifter to achieve beamforming, which focuses the beam by adjusting the signal phase. The radio frequency phase shifter on the base station side is usually considered frequency independent, that is, it performs the same spatial processing on signals of different frequencies within the entire bandwidth, which leads to differences in the orientations of the beams on different subcarriers. This phenomenon is called "beam split" or "beam squint", which is the "dispersion effect" of the beam. Although beam splitting may cause a decrease in signal power on edge subcarriers, it may achieve different beam orientations at different frequencies at the same time. Furthermore, if frequency related devices are used instead of phase shifters to achieve differential processing of beams at different frequencies, effective control of beam splitting may be achieved and applied in the process of beam training. By utilizing the characteristics of beam splitting, it is equivalent to the base station being able to send beams to multiple directions in one configuration, which may effectively reduce the time required for beam training.

In some embodiments, a transmission bandwidth of the first node is divided into at least one subband according to a frequency size, and the transmission bandwidth is a bandwidth occupied upon sending a measurement reference signal. A quasi co-location (QCL) relationship is not met for a same measurement reference signal in different divided subbands.

It should be understood that the above division steps may be performed before S201. Due to the dispersion effect being related to subcarrier frequency, the transmission bandwidth may be divided into different subbands based on frequency sizes, such as being divided according to the transmission bandwidth, a working center frequency of the base station, a beam focusing direction, a beamforming manner, and other factors. The criteria for division are that the QCL relationship is not met for the same measurement reference signal in different subbands, or that large-scale characteristics of the same measurement parameter signal are different in different subbands. Therefore, a subband may also be referred to as a QCL region. There is no intersection between different QCL regions.

In some embodiments, in response to sending a measurement reference signal through a beam, the beam splits into at least one sub-beam towards a different direction in a different subband. A sub-beam corresponds to a subband. That is, each first beam mentioned above may split into at least one sub-beam in a different QCL region, and each first beam mentioned above may further split into at least one sub-beam in a different QCL regions. That is, the base station sending a beam after one configuration, the at least one sub-beam split from the beam may be detected by the UE.

In some embodiments, a number of divided QCL regions may be determined by the first node based on signal transmission characteristics.

For example, if a ratio of the transmission bandwidth to a working center frequency is less than a preset threshold, it indicates a weak degree of dispersion, and the first node may divide the entire transmission bandwidth into a QCL region. If the ratio of the transmission bandwidth to the working center frequency is greater than or equal to the preset threshold, it indicates a strong dispersion, and beam is splitting, the first node may divide the entire transmission bandwidth into a plurality of QCL regions.

As another example, the division for QCL regions may also depends on the beam focusing direction selected by the base station. If a beamforming weight is represented as [1, $e^{j\pi dsin\theta}$, ... , $e^{j\pi(N-1)sin\theta}$]$^T$, where the larger the value $|sin\theta|$, the more obvious the beam splitting caused by dispersion effect, and the larger the QCL region that needs to be divided. Conversely, the smaller the QCL region that needs to be divided. For example, FIG. 6 is a schematic diagram of beam curves on different frequency bands provided in the embodiments of the present disclosure. As shown in the upper figure of FIG. 6, in a case where a beam is transmitted in an angle corresponding to sin$\theta$=0.5, the beam splits into sub-beams with orientations corresponding to sine values of 0.46, 0.5, 0.54 in the QCL regions corresponding to frequencies of $f_c$ - B/2, $f_c$, $f_c$

+ B/2, respectively. As shown in the lower figure of FIG. 6, in a case where a beam is transmitted in an angle corresponding to $\sin\theta=0.1$, the beam splits into sub-beams with orientations corresponding to sine values of 0.09, 0.1, 0.11 in the QCL regions corresponding to frequencies of $f_c - B/2$, $f_c$, $f_c + B/2$, respectively. From this, it can be seen that the larger the value | $\sin\theta$|, the more deviated the direction of a sub-beam split from an original direction, that is, the more obvious the beam splitting.

In some embodiments, after the first node determines the at least one subband, it may inform the second node to maintain cooperation between these two communicating parties, facilitating the implementation of the beam training scheme in the present disclosure. Therefore, the beam training method in the present disclosure further includes: the first node sending indication information to the second node, and the indication information indicates a division manner for the at least one subband and a subcarrier range occupied by each subband. Correspondingly, the second node may receive the indication information from the first node to determine to indicate a subband. Alternatively, the first node may autonomously determine the at least one subband based on the predefined transmission bandwidth of the first node.

In some embodiments, the indication information may be carried in a high-level signaling or a dynamic control signaling.

In some embodiments, a frequency range of the at least one subband is greater than or equal to a frequency range of a recoding resource block group (PRG) defined by relevant protocols.

It should be understood that, considering the characteristics of the QCL region mentioned above, a set of large-scale parameters of the reference signal correspond to a QCL region of this reference signal. This reference signal has different large-scale parameters in different QCL regions. For example, if a reference signal corresponds to N QCL regions, then the reference signal corresponds to N different large-scale parameters, and the large-scale parameters may be specifically reflected as different beam directions.

In some embodiments, there is a QCL relationship between two reference signals associated with a same TCI (transmission configuration indicator) state configuration on a same sub-band, and there is no QCL relationship between the two reference signals on different subbands. Herein, a TCI state refers to a parameter that configures a QCL relationship between one or two reference signals in the relevant standards.

It should be noted that in relevant standards, the QCL relationship is established between two reference signals corresponding to different antenna ports. There being a QCL relationship indicates that wireless channel attributes of the reference signals are the same, so attribute characteristics of another reference signal may be determined by measuring one reference signal. According to relevant standards, for a reference signal, the QCL relationship is met across the entire transmission bandwidth. A QCL region is defined in the present disclosure to determine that the QCL relationship is only met for the reference signal within the same QCL region. Therefore, when configuring the QCL relationship between two reference signals, only parts located in the same "QCL region" meet the QCL relationship, and this definition may facilitate beam training and data transmission.

For example, the base station configures that there is a QCL relationship between a CSI-RS used for beam training and a demodulation reference signal (DM-RS). As shown in F FIG. 7 (a), in different QCL regions, the orientations of the beam formed by CSI-RS are different, and large-scale parameter results obtained by UE for measurement based on this CSI-RS are different. If the base station uses DM-RS in QCL region 2 for data demodulation, it must rely on the measurement result of CSI-RS in QCL region 2, and cannot rely on the measurement result of CSI-RS in QCL region 1. It should be noted that, as shown in FIG. 7 (b), independently configuring multiple sets of reference signals on different frequency bands may also achieve the above purpose, but the independent configuration scheme requires associating multiple TCI states, while only one TCI state is required for association by relying on dividing QCL regions.

In one possible implementation, after considering the dispersion effect of the beam to divide the transmission bandwidth into at least one QCL region, the first node sends the plurality of first beams, each first beam splits into the at least one sub-beam in a different QCL region. The second node measures each sub-beam split from the first beam, and feeds a first measurement result back. Furthermore, the first node sends the plurality of second beams, and the second node measures each sub-beam split from each second beam, feeds a second measurement result back.

Herein, the first measurement result is specifically used to indicate a number of sub-beams meeting a preset condition among the plurality of first beams, and an optimal sub-beam among the plurality of first beams. The second measurement result is specifically used to indicate an optimal sub-beam among the plurality of second beams.

In addition, due to the inconsistency between the number of beams sent from the first node and the number of beams sensed by the second node, the measurement result fed back by the second node should include an identifier of a subband. That is, the first measurement result includes: an identifier and a signal received power of a corresponding subband of each sub-beam among the plurality of first beams. The second measurement result includes: an identifier and a signal received power of a corresponding subband of each sub-beam among the plurality of second beams.

In another possible implementation, the first node configures a CSI-RS resource on each QCL region, and different CSI-RS resources are used with different beam orientations. Due to the fact that the number of beams sent from the first node is consistent with the number of beams sensed by the second node, after the second node performs measurements, the measurement result fed back by the second node may not include identifiers of subbands.

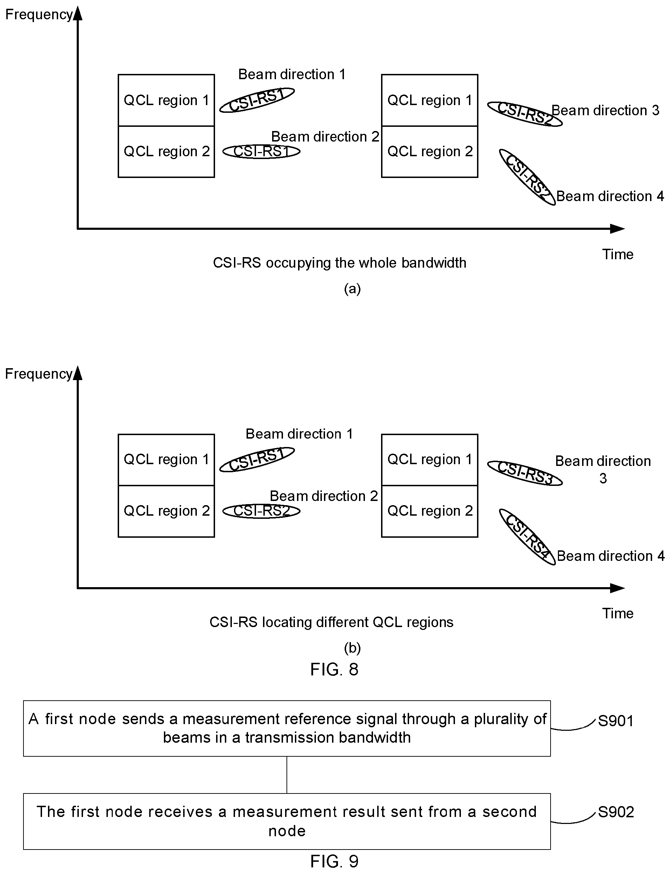

FIG. 8 is a schematic diagram for comparison of two implementations provided in the embodiments of the present disclosure. As shown in (a) of FIG. 8, the CSI-RS1 transmitted in the first stage of beam scanning occupies the entire transmission bandwidth, and the corresponding beam directions (beam direction 1 and beam direction 2 in the figure) are different in different QCL regions. The CSI-RS2 transmitted in the second stage of beam scanning occupies the entire transmission bandwidth, and the corresponding beam directions (beam direction 3 and beam direction 4 in the figure) are different in different QCL regions. As shown in (b) of FIG. 8, each QCL region is configured with its own CSI-RS. In the first stage of beam scanning, the CSI-RS1 is transmitted on QCL region 1, which corresponds to beam direction 1. The CSI-RS2 is transmitted on QCL region 2, which corresponds to beam direction 2. In the first stage of beam scanning, the CSI-RS3 is transmitted on QCL region 1, which corresponds to beam direction 3. The CSI- RS4 is transmitted on QCL region 2, which corresponds to beam direction 4.

The above contents are an explanation for the process of beam training in near-field scenarios. Based on the relevant description for the dispersion effect, the following is an explanation for the process applicable to beam training in far-field scenarios.

FIG. 9 is a flowchart of yet another beam training method provided in the embodiments of the present disclosure. Exemplarily, the beam training method provided in the present disclosure may be applied to the communication system shown in FIG. 1, specifically to the base station in FIG. 1.

As shown in FIG. 9, the beam training method provided in the present disclosure may specifically include the following steps.

In S901, a first node sends a measurement reference signal through a plurality of beams in a transmission bandwidth.

Herein, the transmission bandwidth is divided into at least one subband, and a QCL relationship is not met for the measurement reference signal in different subbands; any beam among the plurality of beams splits into at least one sub-beam towards a different direction in a different subband.

In S902, the first node receives a measurement result sent from a second node.

Herein, the measurement result is used to indicate a number of sub-beams meeting a preset condition, and an optimal sub-beam among the plurality of beams.

In some embodiments, the measurement result includes: an identifier of a corresponding subband of each sub-beam among the plurality of beams.

In some embodiments, the beam training method provided in the present disclosure further includes S903.

In S903, the first node sends indication information to the second node. The indication information is used to indicate a division manner for the at least one subband and a subcarrier range occupied by each subband. It should be noted that S903 may be performed before S901, or S903 may also be performed after S901, and both the S901 and S903 may be performed simultaneously, which is not limited in the embodiments of the present disclosure.

In some embodiments, the indication information is carried in a high-level signaling or a dynamic control signaling.

The relevant descriptions of S901-S903 mentioned above may refer to the previous contents, which will not be repeated herein.

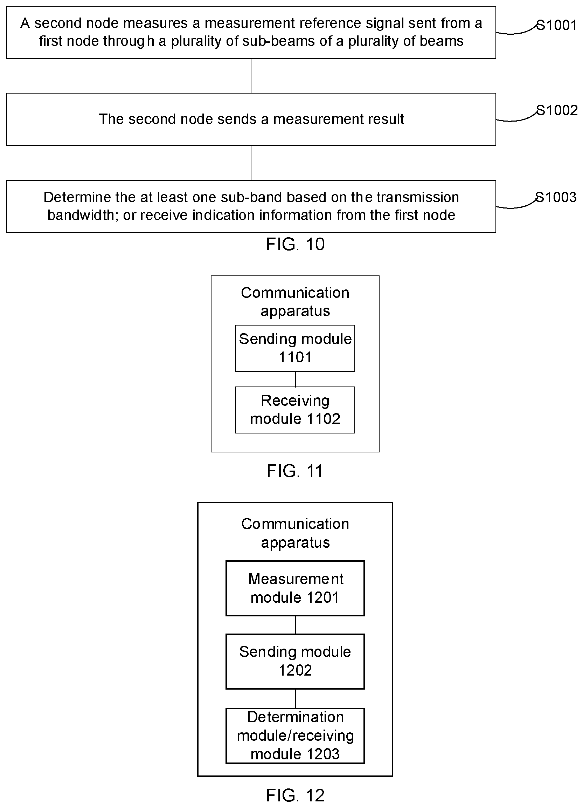

FIG. 10 is a flowchart of yet another beam training method provided in the embodiments of the present disclosure. Exemplarily, the beam training method provided in the present disclosure may be applied to the communication system shown in FIG. 1, specifically to the UE in FIG. 1.

As shown in FIG. 10, the beam training method provided in the present disclosure may specifically include the following steps.

In S1001, a second node measures a measurement reference signal sent from a first node through a plurality of sub-beams of a plurality of beams.

Herein, the transmission bandwidth of the first node is divided into at least one subband, and a QCL relationship is not met for the measurement reference signal in different subbands; any beam among the plurality of beams splits into at least one sub-beam towards a different direction in a different subband.

In S1002, the second node sends a measurement result.

Herein, the measurement result is used to indicate a number of sub-beams meeting a preset condition, and an optimal sub-beam among the plurality of beams.

In some embodiments, the beam training method provided in the present disclosure further includes the following S903.

In S1003, the at least one sub-band is determined based on the transmission bandwidth; or indication information from the first node is received. The indication information is used to indicate a division manner for the at least one subband and a subcarrier range occupied by each subband.

The relevant descriptions of S1001-S1003 mentioned above may refer to the previous contents, which will not be repeated herein.

For the beam training method provided in the embodiments of the present disclosure, the phenomenon of beam splitting is utilized to enable the first node to emit sub-beams in multiple directions in one configuration, and the corresponding second node may perform measurement on each sub-beam, and feed the measurement result back. In this way, during the process of beam training, the original beam may scan multiple directions simultaneously, effectively reducing the time of the beam scanning and improving the efficiency of beam training.

It can be understood that, in order to implement the above-mentioned functions, the communication apparatus (which may be the above-mentioned first node or second node) includes corresponding hardware structures and/or software modules for performing the various functions. Those skilled in the art should easily realize that the present disclosure may be implemented in the form of hardware or a combination of hardware and computer software in combination with algorithms and steps described in the embodiments of the present disclosure. Whether a certain functionality is implemented by hardware or by computer software driving hardware depends on the specific application and design constraint conditions of the technical solutions. A professional technician may use different methods to implement the described functions for each specific application, but such implementation should not be considered beyond the scope of the present disclosure.

The communication apparatus may be divided into functional modules according to the above-mentioned method embodiments in the embodiments of the present disclosure. For example, each functional module may be divided corresponding to each function, or two or more functions may be integrated into one functional module. The above-mentioned integrated module may implemented in the form of hardware, or may be implemented in the form of software. It should be noted that the division of the modules in the embodiments of the present disclosure is illustrated, which is only a logical functional division, and there may be other division manners in an actual implementation. The following is illustrated by adopting a division of each functional module corresponding to each function as an example.

FIG. 11 is a structural schematic diagram of a communication apparatus provided in the embodiments of the present disclosure, and the communication apparatus may perform the beam training method provided in the above-mentioned embodiments. As shown in FIG. 11, the communication apparatus includes a sending module 1101 and a receiving module 1102.

The sending module 1101 is configured to send a measurement reference signal through a plurality of first beams.

The receiving module 1102 is configured to receive a first measurement result sent from a second node; where the first measurement result is used to indicate a number of beams meeting a preset condition among the plurality of first beams, and an optimal beam among the plurality of first beams.

The sending module is 1101 configured to send a measurement reference signal through a plurality of second beams; where the plurality of second beams are used to scan a target area determined based on the number of beams.

The receiving module 1102 is configured to receive a second measurement result sent from the second node; where the second measurement result is used to indicate an optimal beam among the plurality of second beams.

In some embodiments, the preset condition is: a signal received power corresponding to a beam being greater than a first threshold; or a difference between the signal received power corresponding to the beam and a maximum signal received power being less than a second threshold.

In some embodiments, a transmission bandwidth of the first node is divided into at least one subband according to a frequency size, and the transmission bandwidth is a bandwidth occupied upon sending a measurement reference signal; a QCL relationship is not met for a same measurement reference signal in different divided subbands.

In some embodiments, in response to sending a measurement reference signal through a beam, the beam splits into at least one sub-beam towards a different direction in a different subband; a sub-beam corresponds to a subband.

In some embodiments, the first measurement result is specifically used to indicate: a number of sub-beams meeting the preset condition among the plurality of first beams, and an optimal sub-beam among the plurality of first beams; the second measurement result is specifically used to indicate: an optimal sub-beam among the plurality of second beams.

In some embodiments, the first measurement result includes: an identifier and a signal received power of a corresponding subband of each sub-beam among the plurality of first beams; the second measurement result includes: an identifier and a signal received power of a corresponding subband of each sub-beam among the plurality of second beams.

In some embodiments, a frequency range of the at least one subband is greater than or equal to a frequency range of a PRG.

In some embodiments, the sending module 1101 is further configured to: send indication information to the second node; where the indication information is used to indicate a division manner for the at least one subband and a subcarrier range occupied by each subband.

In some embodiments, the indication information is carried in a high-level signaling or a dynamic control signaling.

In some embodiments, there is a QCL relationship between two reference signals associated with a same TCI state configuration on a same sub-band, and there is no QCL relationship between the two reference signals on different subbands.

FIG. 11 is a structural schematic diagram of another communication apparatus provided in the embodiments of the present disclosure, and the communication apparatus may perform the beam training method provided in the above-mentioned embodiments. As shown in FIG. 12, the communication apparatus includes a measurement module 1201 and a sending module 1202.

The measurement module 1201 is configured to measure a measurement reference signal sent from a first node through a plurality of first beams.

The sending module 1202 is configured to send a first measurement result; where the first measurement result is used to indicate a number of beams meeting a preset condition among the plurality of first beams, and an optimal beam among the plurality of first beams.

The measurement module 1201 is configured to measure a measurement reference signal sent from the first node through a plurality of second beams; where the plurality of second beams are used to scan a target area determined based on the number of beams.

The sending module is 1202 configured to send a second measurement result; where the second measurement result is used to indicate an optimal beam among the plurality of second beams.

In some embodiments, the preset condition is: a signal received power corresponding to a beam being greater than a first threshold; or a difference between the signal received power corresponding to the beam and a maximum signal received power being less than a second threshold.

In some embodiments, a transmission bandwidth of the first node is divided into at least one subband according to a frequency size, and the transmission bandwidth is a bandwidth occupied upon sending a measurement reference signal; a QCL relationship is not met for a same measurement reference signal in different divided subbands.

In some embodiments, in response to sending a measurement reference signal through a beam, the beam splits into at least one sub-beam towards a different direction in a different subband; a sub-beam corresponds to a subband.

In some embodiments, the first measurement result is specifically used to indicate: a number of sub-beams meeting the preset condition among the plurality of first beams, and an optimal sub-beam among the plurality of first beams; the second measurement result is specifically used to indicate: an optimal sub-beam among the plurality of second beams.

In some embodiments, the first measurement result includes: an identifier and a signal received power of a corresponding subband of each sub-beam among the plurality of first beams; the second measurement result includes: an identifier and a signal received power of a corresponding subband of each sub-beam among the plurality of second beams.

In some embodiments, a frequency range of the at least one subband is greater than or equal to a frequency range of a PRG.

In some embodiments, the above-mentioned apparatus further includes a determination module 1203. The determination module 1203 is configured to determine the at least one sub-band based on the transmission bandwidth. Alternatively, the above-mentioned apparatus further includes a receiving module 1203. The receiving module 1203 is configured to receive indication information of the first node; where the indication information is used to indicate a division manner for the at least one subband and a subcarrier range occupied by each subband.

In some embodiments, the indication information is carried in a high-level signaling or a dynamic control signaling.

In some embodiments, there is a QCL relationship between two reference signals associated with a same TCI state configuration on a same sub-band, and there is no QCL relationship between the two reference signals on different subbands.

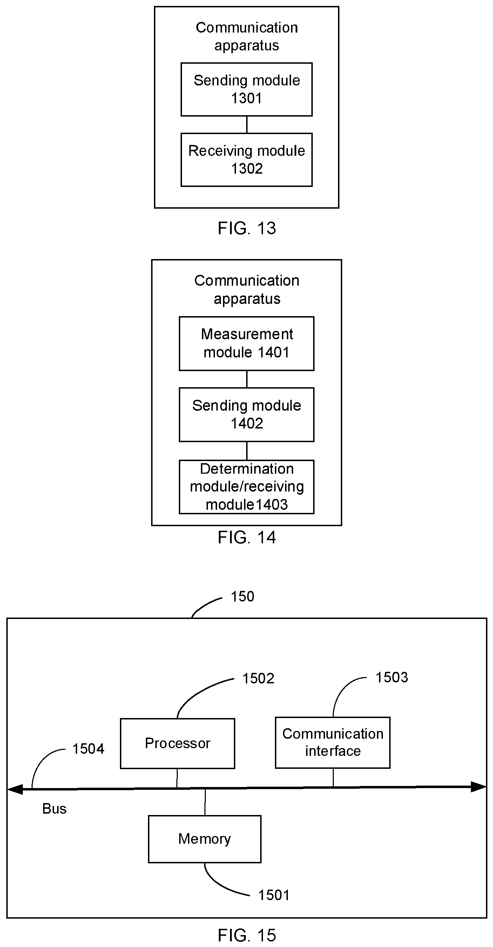

FIG. 13 is a structural schematic diagram of yet another communication apparatus provided in the embodiments of the present disclosure, and the communication apparatus may perform the beam training method provided in the above-mentioned embodiments. As shown in FIG. 13, the communication apparatus includes a sending module 1301 and a receiving module 1302.

The sending module 1301 is configured to send a measurement reference signal through a plurality of beams on a transmission bandwidth; where the transmission bandwidth is divided into at least one subband, and a QCL relationship is not met for the measurement reference signal in different subbands; any beam among the plurality of beams splits into at least one sub-beam towards a different direction in a different subband.

The receiving module 1302 is configured to receive a measurement result sent from a second node; where the measurement result is used to indicate a number of sub-beams meeting a preset condition, and an optimal sub-beam among the plurality of beams.

In some embodiments, the measurement result includes: an identifier of a corresponding subband of each sub-beam among the plurality of beams.

In some embodiments, the sending module is further configured to: send indication information to the second node; where the indication information is used to indicate a division manner for the at least one subband and a subcarrier range occupied by each subband.

In some embodiments, the indication information is carried in a high-level signaling or a dynamic control signaling.

FIG. 14 is a structural schematic diagram of yet another communication apparatus provided in the embodiments of the present disclosure, and the communication apparatus may perform the beam training method provided in the above-mentioned embodiments. As shown in FIG. 14, the communication apparatus includes a measurement module 1401 and a sending module 1402.

The measurement module 1401 is configured to measure a measurement reference signal sent from a first node through a plurality of sub-beams of a plurality of beams; where the transmission bandwidth of the first node is divided into at least one subband, and a QCL relationship is not met for the measurement reference signal in different subbands; any beam among the plurality of beams splits into at least one sub-beam towards a different direction in a different subband.

The sending module 1402 is configured to send a measurement result; where the measurement result is used to indicate a number of sub-beams meeting a preset condition, and an optimal sub-beam among the plurality of beams.

In some embodiments, the measurement result further includes: an identifier of a corresponding subband of each sub-beam among the plurality of beams.

In some embodiments, the above-mentioned apparatus further includes a determination module 1403. The determination module 1403 is configured to determine the at least one sub-band based on the transmission bandwidth. Alternatively, the above-mentioned apparatus further includes a receiving module 1403. The receiving module 1403 is configured to receive indication information of the first node; where the indication information is used to indicate a division manner for the at least one subband and a subcarrier range occupied by each subband.

A communication system is provided in the embodiments of the present disclosure. The communication system includes a first node and a second node. The first node is configured to perform the method described in S201-S204, and the second node is configured to perform the method described in S301-S304. Alternatively, the first node is configured to perform the method described in S901-S903, and the second node is configured to perform the method described in S1001-S1003.

In a case where the functions of the above-mentioned integrated modules are implemented in the form of hardware, another possible structure of a communication apparatus involved in the above-mentioned embodiments is provided in the embodiments of the present disclosure. As shown in FIG. 15, the communication apparatus 150 includes: a processor 1502, and a bus 1504. Optionally, the electronic device or communication apparatus may further include a memory 1501. Optionally, the electronic device or communication apparatus may further include a communication interface 1503.

The processor 1502 may be any of various exemplary logical blocks, modules and circuits described for implementing or executing the embodiments of the present disclosure. The processor 1502 may be a central processor, a general-purpose processor, a digital signal processor, an application specific integrated circuit, a field programmable gate array, or other programmable logic component, a transistor logic component, a hardware assembly, or any combination thereof. The processor 1502 may implement or execute various illustrative logical blocks, modules and circuits described in conjunction with the embodiments of the present disclosure. The processor 1502 may also be a combination that implements computing functions, for example, the processor 1502 includes a combination of one or more microprocessors, a combination of a DSP (digital signal processor) and a microprocessor, or the like.

The communication interface 1503 is configured to connect to other devices through a communication network. The communication network may be the Ethernet, a radio access network, a wireless local area network (WLAN), or the like.

The memory 1501 may be a read-only memory (ROM) or other types of static storage devices that can store static information and instructions, a random access memory (RAM), or other types of dynamic storage devices that can store information and instructions, or an electrically erasable programmable read-only memory (EEPROM), a magnetic disk storage medium or any other magnetic storage devices, or any other medium that can be used to carry or store desired program codes with instructions or data and can be accessed by a computer, which is not limited thereto.

As a possible implementation, the memory 1501 may exist independently from the processor 1502, and the memory 1501 may be connected to the processor 1502 through the bus 1504 for storing instructions or program codes. In a case where the processor 1502 invokes and executes instructions or program codes stored in the memory 1501, the access method provided in the embodiments of the present disclosure may be implemented.

In another possible implementation, the memory 1501 may also be integrated with the processor 1502.

The bus 1504 may be an extended industry standard architecture (EISA) bus, or the like. The bus 1504 may be classified as an address bus, a data bus, a control bus, or the like. For ease of representation, only one bold line is used in FIG. 15 for representing the bus 1504, but it does not mean that there is only one bus or one type of bus.

In some embodiments, the memory 1501 stores executable instructions that, when executed by the processor 1502, cause the communication apparatus to perform the beam training method as described in any embodiment of the above embodiments.

A computer-readable storage medium (for example, a non-transitory computer-readable storage medium) is provided in some embodiments of the present disclosure, the computer-readable storage medium has stored computer program instructions, and the computer program instructions, upon being executed by a computer, enable the computer to perform the beam training method as described in any one of the above embodiments.

For example, the above-mentioned computer-readable storage medium may include, but not limited to: a magnetic storage device (e.g., a hard disk, a floppy disk, or a magnetic tape, etc.), an optical disk (e.g., a compact disk (CD), a digital versatile disk (DVD), etc.), a smart card and a flash memory device (e.g., an erasable programmable read-only memory (EPROM), a card, a stick or a key driver, etc.). The various computer-readable storage media described in the present disclosure may represent one or more devices for storing information and/or other machine-readable storage medium for storing information. The term "machine-readable storage medium" may include, but not limited to, a wireless channel and various other media capable of storing, containing, and/or carrying instructions and/or data.

A computer program product including instructions is provided in the embodiments of the present disclosure, when the computer program product is run on a computer, the computer is enabled to perform the beam training method as described in any one of the above-mentioned embodiments.

The above descriptions are merely specific implementations of the present disclosure, but the scope of protection of the present disclosure is not limited thereto; any variations or replacements within the technical scope disclosed in the present disclosure shall fall within the protection scope of the present disclosure. Therefore, the protection scope of the present disclosure should be subject to the protection scope of the claims.

**Claims**

1.  A beam training method, **characterized by** being applied to a first node, and the method comprising:

    sending a measurement reference signal through a plurality of first beams;
    receiving a first measurement result sent from a second node; wherein the first measurement result is used to indicate a number of beams meeting a preset condition among the plurality of first beams, and an optimal beam among the plurality of first beams;
    sending a measurement reference signal through a plurality of second beams; wherein the plurality of second beams are used to scan a target area determined based on the number of beams; and
    receiving a second measurement result sent from the second node; wherein the second measurement result is used to indicate an optimal beam among the plurality of second beams.

2.  The method according to claim 1, wherein the preset condition is:

    a signal received power corresponding to a beam being greater than a first threshold; or
    a difference between the signal received power corresponding to the beam and a maximum signal received power being less than a second threshold.

3.  The method according to claim 1, wherein

    a transmission bandwidth of the first node is divided into at least one subband according to a frequency size, and the transmission bandwidth is a bandwidth occupied upon sending a measurement reference signal;
    a quasi co-location (QCL) relationship is not met for a same measurement reference signal in different divided subbands.

4.  The method according to claim 3, wherein in response to sending a measurement reference signal through a beam, the beam splits into at least one sub-beam towards a different direction in a different subband; a sub-beam corresponds to a subband.

5.  The method according to claim 4, wherein

    the first measurement result is used to indicate a number of sub-beams meeting the preset condition among the plurality of first beams, and an optimal sub-beam among the plurality of first beams;
    the second measurement result is used to indicate an optimal sub-beam among the plurality of second beams.

6.  The method according to claim 5, wherein

    the first measurement result includes: an identifier and a signal received power of a corresponding subband of each sub-beam among the plurality of first beams;

the second measurement result includes: an identifier and a signal received power of a corresponding subband of each sub-beam among the plurality of second beams.

7. The method according to claim 3, wherein a frequency range of the at least one subband is greater than or equal to a frequency range of a precoding resource block group (PRG).

8. The method according to claim 3, wherein the method further comprises:
sending indication information to the second node; wherein the indication information is used to indicate a division manner for the at least one subband and a subcarrier range occupied by each subband.

9. The method according to claim 8, wherein the indication information is carried in a high-level signaling or a dynamic control signaling.

10. The method according to claim 3, wherein
there is a QCL relationship between two reference signals associated with a same TCI state configuration on a same sub-band, and there is no QCL relationship between the two reference signals on different subbands.

11. A beam training method, **characterized by** being applied to a second node, and the method comprising:

measuring a measurement reference signal sent from a first node through a plurality of first beams;
sending a first measurement result; wherein the first measurement result is used to indicate a number of beams meeting a preset condition among the plurality of first beams, and an optimal beam among the plurality of first beams;
measuring a measurement reference signal sent from the first node through a plurality of second beams; wherein the plurality of second beams are used to scan a target area determined based on the number of beams; and
sending a second measurement result; wherein the second measurement result is used to indicate an optimal beam among the plurality of second beams.

12. The method according to claim 11, wherein the preset condition is:

a signal received power corresponding to a beam being greater than a first threshold; or
a difference between the signal received power corresponding to the beam and a maximum signal received power being less than a second threshold.

13. The method according to claim 11, wherein

a transmission bandwidth of the first node is divided into at least one subband according to a frequency size, and the transmission bandwidth is a bandwidth occupied upon sending a measurement reference signal;
a QCL relationship is not met for a same measurement reference signal in different divided subbands.

14. The method according to claim 11, wherein in response to sending a measurement reference signal through a beam, the beam splits into at least one sub-beam towards a different direction in a different subband; a sub-beam corresponds to a subband.

15. The method according to claim 11, wherein

the first measurement result is used to indicate a number of sub-beams meeting the preset condition among the plurality of first beams, and an optimal sub-beam among the plurality of first beams;
the second measurement result is used to indicate an optimal sub-beam among the plurality of second beams.

16. The method according to claim 15, wherein

the first measurement result includes: an identifier and a signal received power of a corresponding subband of each sub-beam among the plurality of first beams;
the second measurement result includes: an identifier and a signal received power of a corresponding subband of each sub-beam among the plurality of second beams.

17. The method according to claim 13, wherein a frequency range of the at least one subband is greater than or equal to a frequency range of a precoding resource block group (PRG).

18. The method according to claim 13, wherein the method further comprises:

determining the at least one subband based on the transmission bandwidth; or
receiving indication information from the first node; wherein the indication information is used to indicate a division manner for the at least one subband and a subcarrier range occupied by each subband.

19. The method according to claim 18, wherein the indication information is carried in a high-level signaling or a dynamic control signaling.

20. The method according to claim 13, wherein
there is a QCL relationship between two reference signals associated with a same TCI state configuration on a same sub-band, and there is no QCL relationship between the two reference signals on different subbands.

21. A beam training method, applied to a first node, and the method comprising:

sending a measurement reference signal through a plurality of beams on a transmission bandwidth; wherein the transmission bandwidth is divided into at least one subband, and a QCL relationship is not met for the measurement reference signal in different subbands; any beam among the plurality of beams splits into at least one sub-beam towards a different direction in a different subband; and
receiving a measurement result sent from a second node; wherein the measurement result is used to indicate a number of sub-beams meeting a preset condition, and an optimal sub-beam among the plurality of beams.

22. The method according to claim 21, wherein the measurement result comprises: an identifier of a corresponding subband of each sub-beam among the plurality of beams.

23. The method according to claim 21, wherein the method further comprises:
sending indication information to the second node; wherein the indication information is used to indicate a division manner for the at least one subband and a subcarrier range occupied by each subband.

24. The method according to claim 23, wherein the indication information is carried in a high-level signaling or a dynamic control signaling.

25. A beam training method, applied to a second node, and the method comprising:

measuring a measurement reference signal sent from a first node through a plurality of sub-beams of a plurality of beams on a transmission bandwidth; wherein the transmission bandwidth of the first node is divided into at least one subband, and a QCL relationship is not met for the measurement reference signal in different subbands; any beam among the plurality of beams splits into at least one sub-beam towards a different direction in a different subband; and
sending a measurement result; wherein the measurement result is used to indicate a number of sub-beams meeting a preset condition, and an optimal sub-beam among the plurality of beams.

26. The method according to claim 25, wherein the measurement result further comprises: an identifier of a corresponding subband of each sub-beam among the plurality of beams.

27. The method according to claim 25, wherein the method further comprises:

determining the at least one subband based on the transmission bandwidth; or
receiving indication information from the first node; wherein the indication information is used to indicate a division manner for the at least one subband and a subcarrier range occupied by each subband.

28. A communication apparatus, comprising: a processor and a memory for storing instructions that are executable for the processor;
wherein the processor is configured to, upon executing the instructions, cause the communication apparatus to implement the beam training method according to any one of claims 1 to 20 or any one of claims 21 to 27.

**29.** A computer-readable storage medium, wherein computer instructions are stored on the computer-readable storage medium, in response that the computer instructions are executed on a communication apparatus, the communication apparatus is enabled to perform the beam training method according to any one of claims 1 to 20 or any one of claims 21 to 27.

UE        Base station

FIG. 1

| A first node transmits a measurement reference signal by means of a plurality of first beams | S201 |
| --- | --- |
| The first node receives a first measurement result sent by a second node | S202 |
| The first node transmits the measurement reference signal by means of a plurality of second beams | S203 |
| The first node receives a second measurement result sent by the second node | S204 |

FIG. 2

| | |
|---|---|
| A second node measures a measurement reference signal sent from a first node through a plurality of first beams | S301 |
| The second node sends a first measurement result | S302 |
| The second node measures a measurement reference signal sent from a first node through a plurality of second beams | S303 |
| The second node sends a second measurement result | S304 |

FIG. 3

Position 1

Position 2

Base station

FIG. 4

FIG. 5

FIG. 6

FIG. 7

Frequency

Beam direction 1

| QCL region 1 | *CSI-RS1* |
| QCL region 2 | *CSI-RS1* |

Beam direction 2

| QCL region 1 | *CSI-RS2* | Beam direction 3 |
| QCL region 2 | *CSI-RS2* | Beam direction 4 |

CSI-RS occupying the whole bandwidth

Time

(a)

Frequency

Beam direction 1

| QCL region 1 | *CSI-RS1* |
| QCL region 2 | *CSI-RS2* |

Beam direction 2

| QCL region 1 | *CSI-RS3* | Beam direction 3 |
| QCL region 2 | *CSI-RS4* | Beam direction 4 |

CSI-RS locating different QCL regions

Time

(b)

FIG. 8

| A first node sends a measurement reference signal through a plurality of beams in a transmission bandwidth | S901 |
| The first node receives a measurement result sent from a second node | S902 |

FIG. 9

A second node measures a measurement reference signal sent from a first node through a plurality of sub-beams of a plurality of beams — S1001

The second node sends a measurement result — S1002

Determine the at least one sub-band based on the transmission bandwidth; or receive indication information from the first node — S1003

FIG. 10

Communication apparatus

Sending module 1101

Receiving module 1102

FIG. 11

Communication apparatus

Measurement module 1201

Sending module 1202

Determination module/receiving module 1203

FIG. 12

Communication
apparatus

Sending module
1301

Receiving module
1302

FIG. 13

Communication
apparatus

Measurement
module 1401

Sending module
1402

Determination
module/receiving
module1403

FIG. 14

150

1502          1503

1504    Processor    Communication
interface

Bus

Memory

1501

FIG. 15

## INTERNATIONAL SEARCH REPORT

| International application No. |
| --- |
| **PCT/CN2024/092658** |

**A.     CLASSIFICATION OF SUBJECT MATTER**

H04B 7/06(2006.01)i

According to International Patent Classification (IPC) or to both national classification and IPC

**B.     FIELDS SEARCHED**

Minimum documentation searched (classification system followed by classification symbols)

IPC: H04B, H04L

Documentation searched other than minimum documentation to the extent that such documents are included in the fields searched

Electronic data base consulted during the international search (name of data base and, where practicable, search terms used)

CNTXT, ENTXTC, DWPI, CNKI, 3GPP: 波束, 训练, 测量, 参考信号, 个数, 数量, 最优, 阈值, 门限, 频段, 频带, 准共址, QCL, beam, training, rs, reference signal, number, threshold, frequency, band

**C.     DOCUMENTS CONSIDERED TO BE RELEVANT**

| Category* | Citation of document, with indication, where appropriate, of the relevant passages | Relevant to claim No. |
| --- | --- | --- |
| X | WO 2018064348 A1 (INTEL IP CORP.) 05 April 2018 (2018-04-05) description, paragraphs 42-196 | 1-2, 11-12, 28-29 |
| A | CN 108092698 A (HUAWEI TECHNOLOGIES CO., LTD.) 29 May 2018 (2018-05-29) entire document | 1-29 |
| A | CN 114731181 A (HUAWEI TECHNOLOGIES CO., LTD.) 08 July 2022 (2022-07-08) entire document | 1-29 |
| A | CN 107181517 A (ZTE CORP.) 19 September 2017 (2017-09-19) entire document | 1-29 |
| A | US 2016165583 A1 (INDUSTRIAL TECHNOLOGY RESEARCH INSTITUTE) 09 June 2016 (2016-06-09) entire document | 1-29 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **24 June 2024** | **24 June 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2024/092658**

| Patent document cited in search report | | | Publication date (day/month/year) | Patent family member(s) | | | Publication date (day/month/year) |
|---|---|---|---|---|---|---|---|
| WO | 2018064348 | A1 | 05 April 2018 | None | | | |
| CN | 108092698 | A | 29 May 2018 | WO | 2018095305 | A1 | 31 May 2018 |
| CN | 114731181 | A | 08 July 2022 | None | | | |
| CN | 107181517 | A | 19 September 2017 | WO | 2017152504 | A1 | 14 September 2017 |
| US | 2016165583 | A1 | 09 June 2016 | US | 9967886 | B2 | 08 May 2018 |
| | | | | EP | 3029849 | A1 | 08 June 2016 |
| | | | | EP | 3029849 | B1 | 10 May 2017 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311073788